# EUROPÄISCHE PATENTSCHRIFT

(11) **EP 0 471 933 B1**
(45) Veröffentlichungstag und Bekanntmachung des Hinweises auf die Patenterteilung: **10.11.1993**
(21) Anmeldenummer: 91109522.2
(22) Anmeldetag: 11.06.1991
(51) Int. Cl.: F02B 19/14

(54) **Luftverdichtende Brennkraftmaschine mit Selbstzündung, mit einem Hauptbrennraum und einem an diesen angrenzenden und im Zylinderkopf untergebrachten Einsatzkörper mit Vorkammer**
Air-compressing, self-ignition internal combustion engine, with main combustion chamber and a pre-chamber situated in an insert in the cylinder head, bordering the main chamber
Moteur à combustion interne, à compression d'air, à auto-allumage, comprenant une chambre de combustion principale et une pré-chambre située dans une insertion dans la culasse, abordant la chambre principale

(30) Priorität: 14.08.1990 DE 4025665
(43) Veröffentlichungstag der Anmeldung: 26.02.1992
(73) Patentinhaber: MERCEDES-BENZ AG, 70327 Stuttgart (DE)
(72) Erfinder: Fortnagel, Manfred, Dr., W-7054 Korb (DE); Jaeger, Gerhard, W-7153 Weissach i. Tal (DE); Heiderich, Volker, W-7000 Stuttgart 80 (DE); Schmidt, Hans-Georg, W-7440 Nürtingen-Hardt (DE)

(56) Entgegenhaltungen:
- DE-A- 3 703 800
- DE-A- 3 935 497
- FR-A- 2 352 950
- FR-A- 2 393 148

## Beschreibung

Die Erfindung betrifft eine luftverdichtende Brennkraftmaschine mit Selbstzündung, mit einem Hauptbrennraum und einem an diesen angrenzenden und im Zylinderkopf untergebrachten Einsatzkörper mit Vorkammer, welche aus einem kugelähnlichen Brennraum und Schußkanal besteht, nach dem Oberbegriff des Patentanspruchs 1.

Aus der "Technischen Rundschau", 25/90 Seite 37 ist ein für luftverdichtende Brennkraftmaschinen vorgesehener Einsatzkörper mit Vorkammer und Schrägeinspritzung bekannt, der im Brennraum im Bereich der Mündung des Schußkanals einen Einsatzstift mit einem kugelförmigen Prallkopf enthält, dessen Prallkopfunterseite zur Erzeugung eines moderaten Luftdralls schräggestellt ist. Die in den Brennraum der Vorkammer hineinragende Glühkerze ist dabei im Abwind angeordnet, also stromab von der Einspritzdüse. Der Einspritzstrahl trifft etwa zur Hälfte auf die Oberseite des Prallkopfes auf.

Mit derartigen Maßnahmen am Einsatzkörper ist bereits ein hoher Standard hinsichtlich Kraftstoffverbrauch, Abgas- und Geräuschverhalten erreicht.

Der Erfindung liegt die Aufgabe zugrunde, durch besondere vorkammerseitige Maßnahmen die Schadstoffanteile im Abgas weiter abzusenken.

Zur Lösung der Aufgabe dienen die im Kennzeichen des Patentanspruchs 1 angegebenen Merkmale.

Durch die Exzentrizität des Schußkanals zum kugelähnlichen Brennraum sowie die besondere Anordnung des Einsatzstiftes mit starkem Lageversatz zum Schußkanal ergibt sich ein wesentlich größerer Haupteinströmquerschnitt und ein entsprechend kleinerer Einströmquerschnitt der Luft mit der Auswirkung einer intensiveren Vermischung der Luft mit dem eingebrachten Kraftstoff. Das abgasmäßige Verhalten wirkt sich in einer beträchtlichen Reduzierung des Anteils an Kohlenmonoxiden und Kohlenwasserstoffen sowie an Partikeln aus, zu der in den Unteransprüchen vorteilhafte und förderliche Weiterbildungen der Erfindung noch weiter beitragen, deren Ausbildungsvarianten allen motorspezifischen Anforderung gerecht werden, z.B. im Hinblick auf Saug- oder Ladermotoren sowie groß- und kleinvolumige Motoren.

In der Zeichnung sind erfindungsgemäße Ausführungsbeispiele dargestellt und im folgenden näher beschrieben. Es zeigen:
- Fig. 1: einen Querschnitt durch einen Teil einer Brennkraftmaschine mit im Zylinderkopf der Brennkraftmaschine eingesetzten Einsatzkörper mit einer Einspritzdüse und
- Fig.2 bis 5: den Brennraum der Vorkammer - von oben betrachtet - mit verschiedenen Lagen des Schußkanals und Einsatzstiftes sowie verschiedenen Anordnungen der Glühkerze und der durch Pfeil angedeuteten Einspritzdüse.

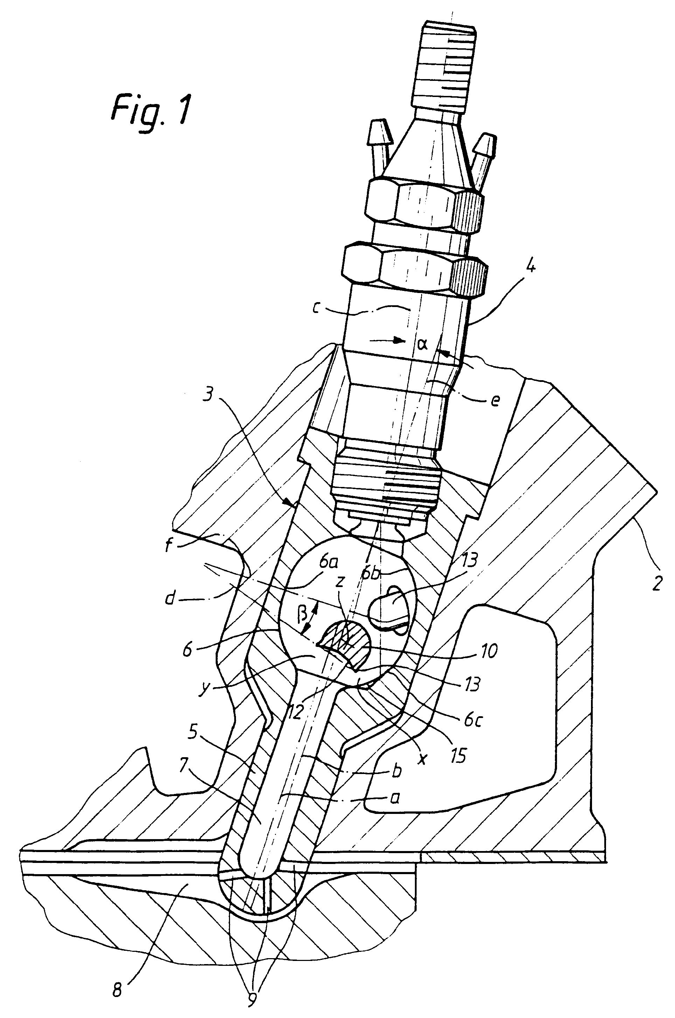

In Fig. 1 ist ein Teilausschnitt einer luftverdichtenden Brennkraftmaschine 1 mit im Zylinderkopf 2 schräg eingesetztem Einsatzkörper 3 und Einspritzdüse 4 gezeigt.

Der Einsatzkörper 3 mit seinem sich mittig anschließenden Einsatzkörperhals 5 enthält eine Vorkammer, die aus einem kugelähnlichen Brennraum 6 und einem im Einsatzkörperhals 5 außermittig angeordneten Schußkanal 7 besteht, der den Brennraum 6 mit dem Hauptbrennraum 8 der Brennkraftmaschine 1 über sternförmig liegende Brenneröffnungen 9 verbindet. Der langgestreckte Brennraum 6 ist durch einen zylindrischen Abschnitt 6a und zu beiden Seiten angrenzenden Halbkugeln 6b, 6c geformt.

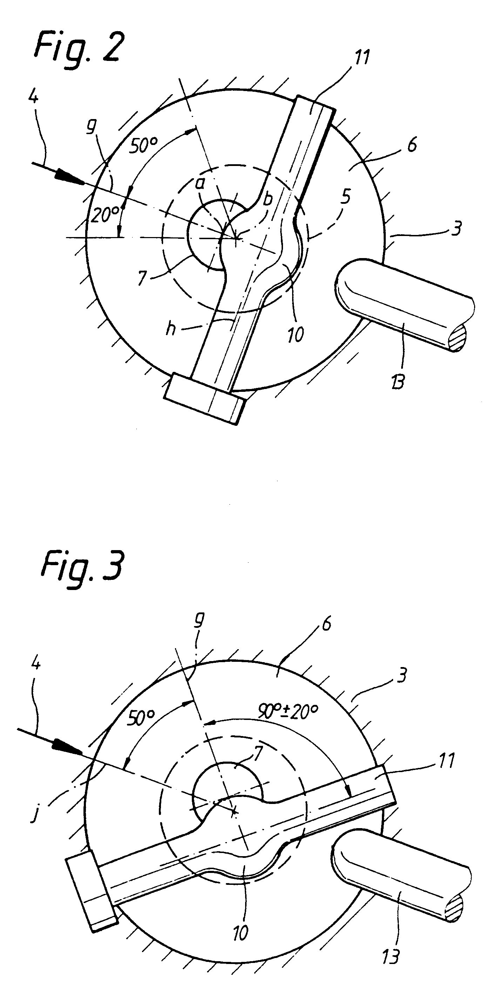

Die Längsachse a des Schußkanals 7 ist zur Längsachse b des Einsatzkörpers 3 mit einem Abstand von 0,25 bis 1,25 mm versetzt und die Längsachse c der Einspritzdüse 4 zur Längsachse b des Einsatzkörpers 3 geneigt angeordnet, wobei der Neigungswinkel α etwa 5° entspricht. Dieser kann zwischen 2° und 10° liegen. Die Einspritzdüse 4 liegt dem Schußkanal 7 derart gegenüber, daß ihr abgegebener Kraftstoffstrahl schräg in den Brennraum 6 in Richtung eines kugelförmigen Prallkopfes 10 gerichtet ist, der mittig liegender Teil eines versetzt im Brennraum 6 in einem der Einmündung des Schußkanals 7 abgewandten Bereich angeordneten Einsatzstiftes 11 (Fig. 2-5) ist und an seiner Unterseite eine kalottenförmige Ausnehmung 12 aufweist, deren durch den Rand bestimmte Ebene d zu einer zur Längsmittelebene e des Einsatzkörpers 3 verlaufenden Quermittelebene f um einen Winkel β von etwa 25° zum Schußkanal 7 hin geneigt angeordnet ist.

Durch die exzentrische Anordnung des Einsatzstiftes 11 und des Schußkanals 7 ergeben sich einerseits ein Nebeneinströmquerschnitt x und andererseits ein Haupteinströmquerschnitt y mit einem Querschnittsverhältnis zwischen 0,55 und 0,8. Der Prallkopf 10 ist an seiner kalottenförmigen Unterseite mit einer Aufwerfung 13 versehen, durch die die einströmende Luft zusätzlich verwirbelt wird.

In den Brennraum 6 ragt eine Glühkerze 13, deren Längsachse in der durch die Längsachsen a, b von Einsatzkörper 3 und Schußkanal 7 bestimmten Ebene 9 liegt (Fig. 2). Die Glühkerze 13 ist auf der der Einspritzdüse 4 und dem Schußkanal 7 gegenüberliegenden Seite angeordnet, und zwar in der oberen Hälfte des Brennraumes 6. Der schräg abgegebene Kraftstoffstrahl führt nah an dem Glühstift der Glühkerze 13 vorbei und trifft teils auf die glühkerzenseitige hälftige Oberseite 14 des Prallkopfes 10 und teils in einer im Brennraum 6 untenliegenden Nische 15 auf.

In Fig. 2 ist ein Ausführungsbeispiel gezeigt, bei dem die Einspritzdüse 4 und die Glühkerze 13 in der durch die Längsachsen a,b von Einsatzkörper 3 und Schußkanal 7 verlaufenden Ebene g und im rechten Winkel zu dieser Ebene g die Längsachse h des mit dem kugelförmigen Prallkopf 10 versehenen Einsatzstiftes 11 liegen. Die Längsachse der Einspritzdüse 4 kann um die Längsachse b des Einsatzkörpers 3 im Uhrzeigersinn um maximal 50° oder entgegen dem Uhrzeigersinn um maximal 20° verdreht sein.

In Fig. 3 ist ein anderes Ausführungsbeispiel gezeigt, bei dem der außermittig liegende Schußkanal 7 gegenüber demjenigen nach Fig. 2 um die Längsachse b des Einsatzkörpers 6 um 50° im Uhrzeigersinn verdreht angeordnet ist, ebenso die Lage des Einsatzstiftes 11.

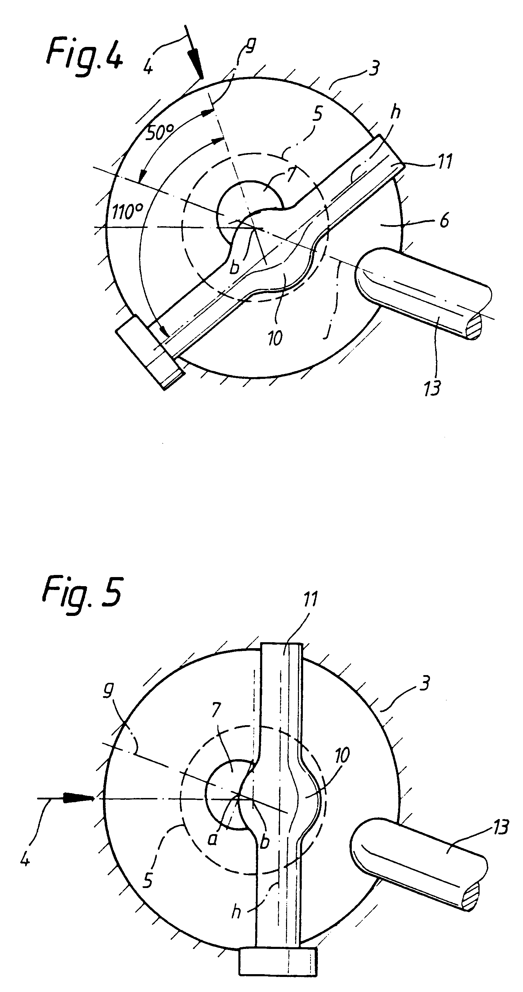

In Fig. 4 ist ein Ausführungsbeispiel gezeigt, das sich gegenüber dem Ausführungsbeispiel nach Fig. 2 dadurch unterscheidet, daß die Einspritzdüse 4 und der Schußkanal 7 gleichermaßen um die Längsachse b des Einsatzkörpers 3 um 50° im Uhrzeigersinn verdreht angeordnet sind, wobei die Längsachse h des Einsatzstiftes 11 um die Längsachse b des Einsatzkörpers 3 von der Ebene g entgegen dem Uhrzeigersinn um 110° verdreht liegt. In Fig. 5 ist ein Ausführungsbeispiel gezeigt, bei dem gegenüber demjenigen gemäß Fig. 2 die Einspritzdüse 4 um 20° entgegen dem Uhrzeigersinn verdreht angeordnet ist, ebenso der Einsatzstift 11.

Gegebenenfalls kann die Glühkerze 13 aus einer Grundposition heraus um die Längsachsen b des Einsatzkörpers 3 im Uhrzeigersinn oder gegen den Uhrzeigersinn geringfügig verdreht angeordnet sein.

## Patentansprüche

1. Luftverdichtende Brennkraftmaschine (1) mit Selbstzündung, mit einem Hauptbrennraum (8) und einem an diesen angrenzenden und im Zylinderkopf (2) untergebrachten Einsatzkörper (3) mit Vorkammer, die aus einem kugelähnlichen Brennraum (6) im Einsatzkörper (3) und einem Schußkanal (7) in einem sich mittig an den Einsatzkörper (3) anschließenden Einsatzkörperhals (5) besteht, mit einem in der unteren Hälfte des Brennraumes angeordneten Einsatzstift (11) mit einem kugelförmigen Prallkopf (10), dessen der Einmündung des Schußkanals (7) zugewandte und durch eine Ausnehmung (12) gebildete Unterseite zur Umlenkung und Aufteilung der Lufteinströmung in eine Haupt- und Nebenströmung derart schräggestellt ist, daß lediglich die Haupteinströmung der von dem Schußkanal (7) in den Brennraum (6) einströmenden Luft im Uhrzeigersinn umgelenkt wird, und dessen Oberseite als Prallfläche für den schräg in den Brennraum (6) gerichteten Kraftstoffstrahl einer Einspritzdüse (4) dient, deren Längsachse (c) geneigt zur Längsachse (e) des Einsatzkörpers (3) angeordnet ist, und mit einer in der oberen Hälfte des Brennraumes (6) und im Abwind der Haupteinströmung nach der Einspritzdüse (4) liegenden Glühkerze (13),
**dadurch gekennzeichnet**,
daß der Schußkanal (7) im Einsatzkörperhals (5) außermittig angeordnet ist und daß der Prallkopf (10) des Einsatzstiftes (11) im Brennraum (6) derart außermittig eingesetzt ist, daß die Längsachse (b) des Einsatzkörpers (3) zwischen der Längsachse (a) des Schußkanals (7) und der Mitte (z) des kugelförmigen Prallkopfes (10) verläuft.

2. Brennkraftmaschine nach Anspruch 1,
**dadurch gekennzeichnet,**
daß die Längsachse der Glühkerze (13) in der Ebene liegt, die durch die Längsachsen von Einsatzkörper (3) und Schußkanal (7) bestimmt ist.

3. Brennkraftmaschine nach Anspruch 1 oder 2,
**dadurch gekennzeichnet,**
daß der von den Längsachsen von Einsatzkörper (3) und Schußkanal (7) gebildete Abstand 0,25 bis 1,25 mm beträgt.

4. Brennkraftmaschine nach Anspruch 1,
**dadurch gekennzeichnet,**
daß die Ausnehmung (12) des Prallkopfes (10) kalottenförmig ausgebildet ist und der Rand dieser Ausnehmung (12) eine Aufwerfung (13) aufweist.

5. Brennkraftmaschine nach Anspruch 1 oder 2,
**dadurch gekennzeichnet,**
daß die Längsachse (c) der Einspritzdüse (4) in der durch die Längsachsen von Einsatzkörper (3) und Schußkanal (7) bestimmten Ebene (g) liegt.

6. Brennkraftmaschine nach den Ansprüchen 2 und 5,
**dadurch gekennzeichnet,**
daß die Längsachse des Einsatzstiftes (11) quer zu der durch die Längsachsen von Einsatzkörper (3) und Schußkanal (7) bestimmten Ebene (g) liegt.

7. Brennkraftmaschine nach einem der vorhergehenden Ansprüche,
**dadurch gekennzeichnet,**
daß die Längsachse (c) der Einspritzdüse (4) entgegen dem Uhrzeigersinn um maximal 20° oder im Uhrzeigersinn um maximal 50° gegenüber der Ebene (g) verdreht angeordnet ist, die durch die Längsachsen von Einsatzkörper (3) und Schußkanal (7) bestimmt ist.

8. Brennkraftmaschine nach Anspruch 7,
**dadurch gekennzeichnet,**
daß gegenüber einer Ebene (j), die durch die Längsachsen von Einsatzkörper (3) und Glühkerze (13) bestimmt ist, die durch die Längsachsen von Einsatzkörper (3) und Schußkanal (7) bestimmte Ebene (g) und/oder die Längsachse des Einsatzstiftes (11) gleichermaßen wie die Einspritzdüse (4) verdreht angeordnet sind.

9. Brennkraftmaschine nach den Ansprüchen 1,2 oder 6,
**dadurch gekennzeichnet,**
daß die durch die Längsachsen von Einsatzkörper (3) und Schußkanal (7) bestimmte Ebene (g) und die Längsachse des Einsatzstiftes (11) einen maximalen Winkel von 110° oder einen minimalen Winkel von 70° bilden.

## Claims

1. Air-compressing internal combustion engine (1) with self-ignition, with a main combustion space (8) and an insert (3) adjoining the latter, accommodated in the cylinder head (2) and having an antechamber which comprises a sphere-like combustion space (6) in the insert (3) and a conduit (7) in an insert neck (5) centrally adjoining the insert (3), with an insertion pin (11) arranged in the lower half of the combustion space and having a spherical impact head (10), the underside of which, which faces the mouth of the conduit (7) and is formed by a recess (12), is, in order to deflect and divide the inflow of air into a main and a secondary flow, set obliquely in such a way that only the main inflow of the air flowing in from the conduit (7) into the combustion space (6) is deflected in the clockwise direction, and the upper side of which serves as an impact surface for the fuel spray, directed obliquely into the combustion space (6), of an injection nozzle (4), the longitudinal axis (c) of which is arranged obliquely to the longitudinal axis (e) of the insert (3), and with a glow plug (13) lying in the upper half of the combustion space (6) and in the downward current of the main inflow downstream of the injection nozzle (4), characterised in that the conduit (7) is arranged eccentrically in the insert neck (5) and in that the impact head (10) of the insertion pin (11) is inserted eccentrically in the combustion space (6) in such a way that the longitudinal axis (b) of the insert (3) extends between the longitudinal axis (a) of the conduit (7) and the centre (z) of the spherical impact head (10).

2. Internal combustion engine according to Claim 1, characterised in that the longitudinal axis of the glow plug (13) lies in the plane which is defined by the longitudinal axes of insert (3) and conduit (7).

3. Internal combustion engine according to Claim 1 or 2, characterised in that the interval formed by the longitudinal axes of insert (3) and conduit (7) is 0.25 to 1.25 mm.

4. Internal combustion engine according to Claim 1, characterised in that the recess (12) of the impact head (10) is of cup-shaped design and the rim of this recess (12) has a bell mouth (13).

5. Internal combustion engine according to Claim 1 or 2, characterised in that the longitudinal axis (c) of the injection nozzle (4) lies in the plane (g) defined by the longitudinal axes of insert (3) and conduit (7).

6. Internal combustion engine according to Claims 2 and 5, characterised in that the longitudinal axis of the insertion pin (11) lies transversely to the plane (g) defined by the longitudinal axes of insert (3) and conduit (7).

7. Internal combustion engine according to one of the preceding claims, characterised in that the longitudinal axis (c) of the injection nozzle (4) is arranged in a position rotated by a maximum of 20° in the anticlockwise direction or by a maximum of 50° in the clockwise direction relative to the plane (g) which is defined by the longitudinal axes of insert (3) and conduit (7).

8. Internal combustion engine according to Claim 7, characterised in that the plane (g) defined by the longitudinal axes of insert (3) and conduit (7) and/or the longitudinal axis of the insertion pin (11) are, like the injection nozzle (4), arranged in a position rotated relative to a plane (j) which is defined by the longitudinal axes of insert (3) and glow plug (13).

9. Internal combustion engine according to Claims 1, 2 or 6, characterised in that the plane (g) defined by the longitudinal axes of insert (3) and conduit (7) and the longitudinal axis of the insertion pin (11) form a maximum angle of 110° or a minimum angle of 70°.

## Revendications

1. Moteur à combustion interne (1) à compression d'air et auto-allumage, comprenant une chambre de combustion principale (8) et un insert (3) jouxtant cette chambre et logé dans la culasse (2) et comportant une préchambre, qui est constituée par une chambre de combustion (6) de forme sphérique ménagée dans l'insert (3) et un canal de coup de feu (7) dans un col (5) de l'insert, qui se raccorde en position médiane à l'insert (3), et comportant une tige d'insertion (11) disposée dans la moitié inférieure de la chambre de combustion et comportant une tête d'impact sphérique (10), dont la face inférieure, qui est tournée vers l'embouchure du canal de coup de feu (7) et est formée par un évidement (12), est disposée obliquement pour dévier et répartir l'écoulement arrivant d'air en un écoulement principal et en un écoulement secondaire de telle sorte que seul l'écoulement principal d'entrée de l'air, qui pénètre à partir du canal de coup de feu (7) dans la chambre de combustion (6), est dévié dans le sens des aiguilles d'une montre, et dont la face supérieure est utilisée comme surface d'impact pour le jet de carburant, qui est dirigé obliquement dans la chambre de combustion (6), d'un injecteur (4), dont l'axe longitudinal (c) est incliné par rapport à l'axe longitudinal (e) de l'insert (3), et comportant une bougie d'allumage (13), qui est située dans la moitié supérieure de la chambre de combustion (6) et dans la partie du courant principal d'entrée, située en aval de l'injecteur (4),
caractérisé en ce
que le canal de coup de feu (7) est monté de façon excentrée dans le col (5) de l'insert et que la tête d'impact (10) de la tige d'insertion (11) est insérée d'une manière excentrée dans la chambre de combustion (6) de sorte que l'axe longitudinal (b) de l'insert (3) se situe entre l'axe longitudinal (a) du canal de coup de feu (7) et le centre z de la tête d'impact de forme sphérique (10).

2. Moteur à combustion interne selon la revendication 1, caractérisé en ce que l'axe longitudinal de la bougie d'allumage (13) est situé dans le plan qui est déterminé par les axes longitudinaux de l'insert (3) et du canal de coup de feu (7).

3. Moteur à combustion interne selon la revendication 1 ou 2, caractérisé en ce que la distance entre les axes longitudinaux de l'insert (3) et du canal de coup de feu (7) est comprise entre 0,25 et 1,25 mm.

4. Moteur à combustion interne selon la revendication 1, caractérisé en ce que l'évidement (12) de la tête d'impact (10) est réalisé en forme de calotte et que le bord de cet évidement (12) possède une partie évasée (13).

5. Moteur à combustion interne selon la revendication 1 ou 2, caractérisé en ce que l'axe longitudinal (c) de l'injecteur (4) est situé dans le plan (g) défini par les axes longitudinaux de l'insert (3) et du canal de coup de feu (7).

6. Moteur à combustion interne selon les revendications 2 et 5, caractérisé en ce que l'axe longitudinal de la tige d'insertion (11) s'étend transversalement par rapport au plan (g) défini par les axes longitudinaux de l'insert (3) du canal de coup de feu (7).

7. Moteur à combustion interne selon l'une des revendications précédentes, caractérisé en ce que l'axe longitudinal (c) de l'injecteur (4) est disposé en étant pivoté, en sens inverse des aiguilles d'une montre, au maximum de 20° ou, dans le sens des aiguilles d'une montre, au maximum de 50° par rapport au plan (g), qui est défini par les axes longitudinaux de l'insert (3) et du canal de coup de feu (7).

8. Moteur à combustion interne selon la revendication 7, caractérisé en ce que le plan (g), qui est défini par les axes longitudinaux de l'insert (3) du canal de coup de feu (7), et/ou l'axe longitudinal de la tige d'insertion (11) sont disposés en étant pivotés de la même manière que l'injecteur (4) par rapport à un plan (j), qui est défini par les axes longitudinaux de l'insert (3) et de la bougie d'allumage (13).

9. Moteur à combustion interne selon les revendications 1, 2 ou 6, caractérisé en ce que le plan (g), qui est défini par les axes longitudinaux de l'insert (3) et du canal de coup de feu (7), et l'axe longitudinal de la tige d'insertion (11) font un angle maximum de 110° ou un angle minimum de 70°.
